(19) Europäisches Patentamt
European Patent Office
Office européen des brevets

(11) **EP 3 035 081 A1**

(12) **EUROPEAN PATENT APPLICATION**

(43) Date of publication:
**22.06.2016 Bulletin 2016/25**

(51) Int Cl.:
**G01T 1/02** (2006.01)    **G01T 1/04** (2006.01)

(21) Application number: **15164709.6**

(22) Date of filing: **22.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.12.2014 LT 2014141**

(71) Applicant: **Vilnius University**
**01513 Vilnius (LT)**

(72) Inventors:
• **Gaubas, Eugenijus**
**LT-06203 Vilnius (LT)**
• **Ceponis, Tomas**
**LT-04116 Vilnius (LT)**
• **Kalesinskas, Vidas**
**LT-14264 Didzioji Riese, Vilniaus raj. (LT)**
• **Vaitkus, Juozas Vidmantis**
**LT-10221 Vilnius (LT)**

(74) Representative: **Klimaitiene, Otilija**
**AAA Law**
**J. Jasinskio street 16A**
**03163 Vilnius (LT)**

(54) **METHOD AND DEVICE FOR MEASUREMENT OF LARGE FLUENCES AND DOSES OF HIGH ENERGY IRRADIATIONS**

(57)    The present invention provides method for measuring large doses of irradiation, and is addressed to simultaneous detection and dosimetry of gamma rays and high energy hadrons, which is implemented by exposing of the tandem dosimeters to unknown radiation, by receiving data at the first reader - electronic paramagnetic resonance spectrometer, from at least one dosimeter, that is set to detect gamma rays, and additionally, at the second reader - non-equilibrium carrier recombination lifetime meter, from at least one dosimeter, that is set to detect hadron irradiation, using contactless means of microwave probed photoconductivity transients in monocrystalline silicon, coated with properly passivated surfaces, under excitation of a pulsed IR laser light, linking of the obtained data in both dosimeters, integrated into a single tandem dosimeter, and evaluation of the dose, the spatial dose distribution of gamma rays and hadron irradiation using the relevant models and analysis software.

Fig. 2

EP 3 035 081 A1

## Description

### Field of the invention

This invention relates to a method and device for the measurement of large doses of irradiation, in particular a method and a device for simultaneous detection and dosimetry of gamma rays and high energy hadrons.

### Background art

Known methods and devices for measuring the radiation dose, are based on measurements of structural and physical changes in materials, subjected to high energy irradiation.

A scientific paper [Katz R., Sharma S. C., and Homayoonfar M. "The structure of particle tracks". In Topics in Radiation Dosimetry, Radiation Dosimetry Suppl. 1 (Ed. Attix, F. H.) Academic press, New York. 1972.] discloses method for measurement of concentration of free radicals in irradiated alanine dosimeter (tablet or strip) by means of electron paramagnetic resonance spectrometry (EPR) where energy per unit mass - dose is absorbed by a dosimeter, and evaluated from the ratio of the measured amplitudes of the appropriate EPR spectral lines. This ratio linearly depends on irradiation dose in a quite wide range. It is considered that a simple exponential formula describes the response of alanine after definite $\gamma$-ray irradiation dose. A drawback of the analogue method is that the relative effectiveness to different radiations (charged particles, neutrons, etc.) should be introduced in order to correct the dosimeter response, which significantly depends on a specific radiation spectrum and can be modelled if the shape of the radial distribution of dose around the path of the particle is known.

Based on these features, alanine dosimeters are employed for dosimetry of the known ionizing radiation types, mostly, for the $\gamma$-ray dosimetry.

Patent application No. PCT/EP2007/064354 discloses a dosimeter which can be used for measurement of concentration of free radicals and comprises a carrier with alanine dosimeter disposed on it, the dose of irradiation of which, absorbed during radiation exposure, is determined using EPR spectrometer reader, and at least one labelling field for the purpose of clear association of dosimetry information. A drawback of the device is that it can be used for evaluation of a dose of known radiation type only. Other disadvantages accompanying use of this dosimeter are: a strong decrease of sensitivity to radiation in high energy range; calibration issues above the certain energy level; its inapplicability for hadron fluence measurements.

Disadvantages of the method of the prior art are eliminated by evaluating the total unknown radiation dose of the tandem dosimeter placed into EPR spectrometer. Carrier recombination lifetime is measured by the carrier recombination lifetime meter in the second silicon dosimeter in addition to measuring concentration of free radicals in the alanine dosimeter of the tandem dosimeter. The irradiation dose and spectral composition of the radiation is calculated after processing data from both dosimeters and evaluating relative efficiency of the tandem dosimeter. Further, the lifetime of the carrier recombination of the monocrystalline silicon is measured by exciting the crystal with a short pulse of laser light. The response is recorded by microwave probing contactless means. The hadron irradiation fluence is calculated using the measured recombination lifetime.

Disadvantages of the device of the closest prior art are eliminated by a device comprising a carrier with gamma rays dosimeter (alanine) disposed on it, at least one labelling field for the purpose of clear association of dosimetry information, and additionally a second dosimeter, e.g. a silicon monocrystal, disposed on the same side as alanine dosimeter. The surfaces of the second dosimeter are coated with proper passivating layers, and crystal dimensions, location and orientation are chosen such that both dosimeters could be integrated into a single tandem dosimeter. The thickness and composition of passivating surface layer is chosen such that passivating layer would be able to hold the proper inner electrostatic charge, would be radiation-tolerant, and would be compatible with electrical conductivity type of the silicon monocrystal.

### Short description of the invention

The present invention provides a method for the measurement of large doses of irradiation, and is addressed to simultaneous detection and dosimetry of gamma rays and high energy hadrons. According to the invention, the tandem dosimeter is exposed to unknown radiation, data from at least one dosimeter, being set to detect gamma rays, is received at the first reader, e.g. an electronic paramagnetic resonance spectrometer. Additionally data from at least one dosimeter, being set to detect hadron irradiation, is received at the second reader, e.g. a non-equilibrium carrier recombination lifetime meter, using contactless means of microwave probed photoconductivity transients in monocrystalline silicon, which is coated with proper passivating layers, under excitation of a pulsed IR laser. Data obtained from both dosimeters, which are integrated into a single tandem dosimeter, are linked and the dose, the spatial dose distribution of gamma rays and hadron irradiation are evaluated using relevant models and analysis software.

**Short description of the drawings**

Fig. 1 shows a flowchart of the method according to the invention for the measurement of large doses of irradiation.
Fig. 2 shows a frontal and lateral side view of the tandem dosimeter.

**Detailed description of the invention**

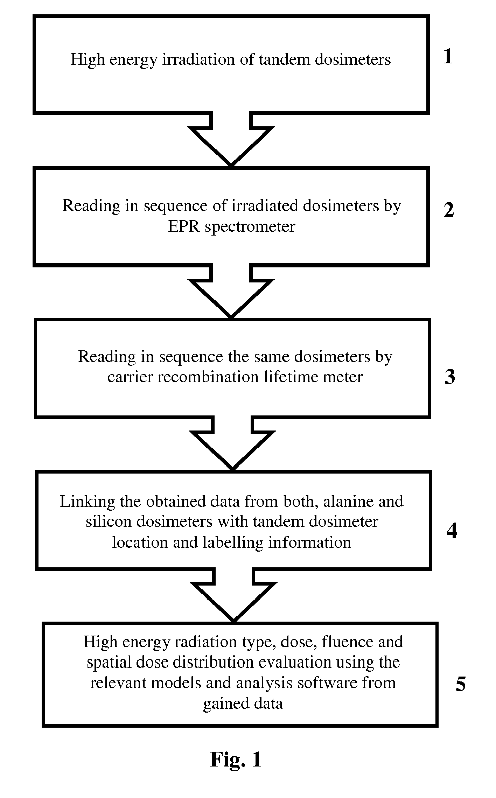

Fig. 1 is a flowchart of the method according to the invention for the measurement of large doses of irradiation, where numbers denote a sequence of measurement actions. The method includes steps of: 1) irradiating the tandem dosimeter with high energy ; 2) reading in sequence the irradiated dosimeters (2, 3) of the tandem dosimeter by EPR spectrometer; 3) reading in sequence said dosimeters (2, 3) of the tandem dosimeter by carrier recombination lifetime meter; 4) linking the obtained data from alanine (2) and silicon (3) dosimeters with location and labelling information of the tandem dosimeter; 5) evaluating high energy radiation dose, fluence and spatial dose distribution using previously obtained data from both dosimeters (2, 3) and relevant models and analysis software.

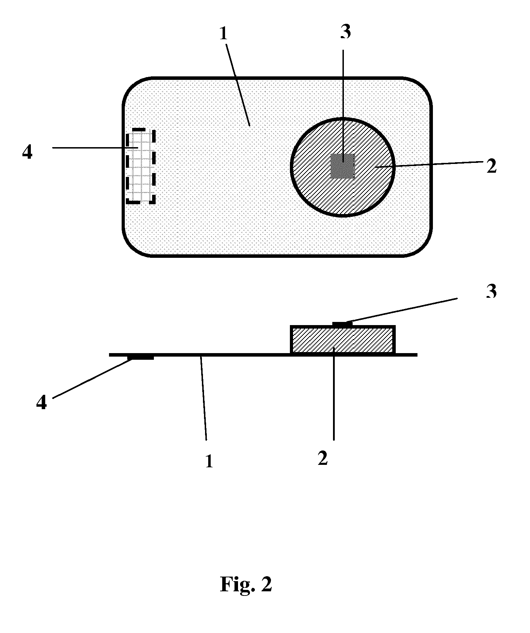

Fig. 2 is a frontal and lateral side view of the tandem dosimeter. The dosimeter comprises a carrier of the tandem dosimeter (1), the alanine dosimeter (2), the silicon dosimeter (3), the labelling field (4).

The operation of the tandem dosimeter is as follows: after a high energy irradiation, alanine and silicon dosimeters (2, 3) undergo irreversible molecular and structural changes in their physical properties. In the alanine dosimeter (2), the free radicals are formed with concentration proportional to an absorbed dose. The concentration of the radicals can be determined by means of electron paramagnetic resonance by measuring the peak-to-peak amplitudes of EPR spectral lines, thereby energy per unit mass, a dose, absorbed by the dosimeter is evaluated. The relation between the concentration of the radicals and the irradiation dose is not linear. In order to model dosimeter response and to establish this relation, the track structure theory is applied. It is assumed that the EPR sensitive elements (free radicals in case of alanine) obey the cumulative Poisson distribution. Then, a probability $P(D)$ that the EPR sensitive centre after $\gamma$-ray irradiation dose D is defined as:

$$P(D) = S(D)/S_0 = 1 - \exp\left(-D/E_0\right), \tag{1}$$

where $S(D)$ is the number of free radicals (per unit weight of an alanine dosimeter) produced by a dose D, So is the saturated value of $S(D)$, and Eo is the $\gamma$-ray irradiation test dose, at which 1/e (~37%) of the active centres remain inactivated. According to the track structure theory, the active centres are assumed to be spheres of radius $a_0$, and that (in)activation of these centres is due to "hits" by secondary electrons, irrespectively of whether they originate from $\gamma$-rays or from secondary electrons surrounding the path of a particle traversing the dosimeter medium. The secondary electrons dose depends on a distance from the particle path (approximately inversely with the square of radial distance). The average dose $E(r)$ over the volume of the sensitive centres, placed at a distance $r$ from the particle path, is calculated by introducing the radial distribution of the activation probability $P(r)$

$$P(r) = P\left(E(r)\right) = P\left[1 - \exp\left(-E(r)/E_0\right)\right]. \tag{2}$$

The single-particle activation cross-section is calculated by integrating $P(r)$ over all distances, limited to the maximum radial penetration depth of the secondary electrons, $\theta$

$$\sigma = \int_0^{\theta + a_0} 2\pi P(r)\, dr\,. \tag{3}$$

The number of produced free radicals by a fluence, F, particles/cm$^2$, ($D_i = F \cdot L$, L is the stopping power of an ion, or its LET) the signal observed in a thin track-segment is:

$$S(D_i) = S_0\left[1 - \exp\left(-\sigma F\right)\right]. \tag{4}$$

The relative effectiveness ($RE$) of the dosimeter is defined as the ratio of the dosimeter signals after equal doses of charged particles and $\gamma$-rays irradiation:

$$RE = S(D_i)/S(D_\gamma), \quad D_i = D_\gamma . \tag{5}$$

The relative dosimeter effectiveness in track segment irradiation (in a linear approach) is expressed as:

$$RE \approx \sigma E_0 F/D_i . \tag{6}$$

The signal value (4) is then corrected by using dosimeter effectiveness (6).

In case of a thick alanine dosimeter the value of the dosimeter response (to stopping ions of initial kinetic energy $T_i$ in the range $R$, or fast neutrons) is calculated by introducing the average values of $\sigma_{av}$ and $L_{av}$ and by integrating the response over the path length T [M. P. R. Waligórski, G. Danialy, Kim Sun Loh, and R. Katz. "The Response of the Alanine Detector after Charged-Particle and Neutron Irradiations". Applied Radiation and Isotopes 40:10-12 (1989), pp. 923-933]:

$$\sigma_{av}R = \int_0^R \sigma \, dr = \int_{T_i}^0 (\sigma/L)dT , \tag{7}$$

$$L_{av} = T_i/R . \tag{8}$$

The second sensor (3) of the tandem dosimeter, namely, the monocrystalline large resistivity silicon sensor (3), after irradiation by high energy particles (e.g., hadrons) undergoes formation of the bulk crystallographic defects (their concentration is proportional to particles fluence). This leads to irreversible changes of crystal physical properties, namely, carrier recombination lifetime. These radiation defects form recombination centres having fixed cross-section, and their concentration is evaluated by measurement of the photoconductivity parameters in Si. An instantaneous carrier lifetime, $\tau$, is measured as a parameter of non-equilibrium carrier density variation in time, $t$, defined by relation

$$\tau = -n/[\partial n / \partial t], \tag{9}$$

which characterises a rate of carrier density changes at a definite time moment. Carrier recombination lifetime, $\tau_R$, is related to the concentration of recombination centres, $N_R$, carrier capture cross-section, $\sigma_R$, and carrier thermal velocity, $v_T$, by expression:

$$\tau_R = \frac{1}{\sigma_R v_T N_R} . \tag{10}$$

Distribution of recombination centres concentration produced by high energy irradiation is uniform within crystal bulk and it is proportional to the fluence, F, as

$$N_R = \kappa F , \tag{11}$$

where $\kappa$ is the proportionality coefficient, which determines formation rate of the recombination centres induced by irradiation, and it is invariable for cluster type radiation defects, produced by the hadrons. Hadron fluence is calculated using expression:

$$F = \frac{1}{\sigma_R v_T \kappa \tau_R} = \frac{A}{\tau_R} . \tag{12}$$

The parameter $A[s/cm^2]$, is evaluated from the calibration measurements, where radiation damage by fluence is normalized to the equivalent $F_{1\text{MeV}\,n}$ of 1 MeV neutron energy.

Compared with the closest prior art, the present method and the device for measuring the fluences and doses of high energy irradiations, enables discrimination of spectral components ($\gamma$-ray, hadrons, etc.) of irradiation, allow the rapid measuring of the high fluences in a wide interval by contactless means, enables scanning of the profiles of irradiation spatial distributions, enables the determination of radiation source localization, and these techniques are applicable in large scale monitoring systems, while instrumentation has a simple and compact construction.

**Claims**

1. Method for measuring large fluences and doses of high energy irradiations, wherein the alanine dosimeter is irradiated and concentration of free radicals in irradiated alanine dosimeter is measured by means of electron paramagnetic resonance spectrometry, **characterized in that** additionally and simultaneously with the alanine dosimeter (2), the monocrystalline silicon dosimeter (3) is irradiated and non-equilibrium carrier recombination lifetime in silicon is measured, and **in that** the dose and radiation type are evaluated after processing data from both dosimeters and evaluating the relative effectiveness of the alanine dosimeter.

2. Method according to claim 1, **characterized in that** the non-equilibrium carriers are excited by a short pulse of laser light and recombination lifetime is measured by contactless means using the microwave probing of exited carriers in the laser's beam spot.

3. Method according to claim 1, **characterized in that** multiple dosimeters are arranged and oriented as a system in such a way, that the combined indications of separate dosimeters would be selective to a direction of a radiation source, and **in that** radiation dose distribution is evaluated from readings of the simultaneously irradiated dosimeters (2, 3).

4. Device for measuring large fluences and doses of high energy irradiations, comprising a carrier with alanine dosimeter disposed on it, and at least one labelling field for the purpose of clear association of dosimetry information, **characterized in that** in addition to the alanine dosimeter (2), a second dosimeter (3) is mounted on the same side as said alanine dosimeter (2), where dimensions, location and orientation of said dosimeters (2, 3) are such, that both dosimeters (2, 3) integrate into a single tandem dosimeter.

5. Device according to claim 4, **characterized in that** the second dosimeter is made of a monocrystalline high purity silicon with surfaces being coated with passivating layers.

6. Device according to claim 4, **characterized in that** the thickness and composition of the passivating surface layer is chosen such, that the layer would be able to hold the proper inner electrostatic charge, would be radiation-tolerant, and would be compatible with electrical conductivity type of the silicon monocrystal.

**Fig. 1**

**Fig. 2**

Europäisches
Patentamt

European
Patent Office

Office européen
des brevets

# EUROPEAN SEARCH REPORT

Application Number

EP 15 16 4709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/217390 A1 (LUXICH PENNY [US] ET AL) 30 August 2012 (2012-08-30) <br> * figure 1 * <br> * paragraphs [0051], [0056] - [0057] * <br> ----- | 1 | INV. <br> G01T1/02 <br> G01T1/04 |
| Y | GB 2 259 809 A (ATOMIC ENERGY AUTHORITY UK [GB]) 24 March 1993 (1993-03-24) <br> * page 2, line 14 - line 23 * <br> * page 3, line 20 - line 33 * <br> ----- | 1 | |
| X | US 2007/114445 A1 (SCHELL THOMAS E [US] ET AL) 24 May 2007 (2007-05-24) | 4 | |
| Y | * figures 1, 2 * <br> * paragraph [0028] * <br> ----- | 5,6 | |
| Y | WO 2005/008286 A2 (RADIATION WATCH LTD [GB]; DOUGHTY PETER TREVOR [GB]; ANDERSON MICHAEL) 27 January 2005 (2005-01-27) <br> * claims 18, 24 * <br> * figures 1, 2, 8 * <br> * page 14, line 3 - line 6 * <br> ----- | 5,6 | |

TECHNICAL FIELDS
SEARCHED      (IPC)

G01T

The present search report has been drawn up for all claims

| Place of search | Date of completion of the search | Examiner |
|---|---|---|
| The Hague | 4 May 2016 | Johnstone, John |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.......................................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 15 16 4709

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2016

| Patent document cited in search report | | | Publication date | Patent family member(s) | | | Publication date |
|---|---|---|---|---|---|---|---|
| US 2012217390 | A1 | | 30-08-2012 | NONE | | | |
| GB 2259809 | A | | 24-03-1993 | NONE | | | |
| US 2007114445 | A1 | | 24-05-2007 | NONE | | | |
| WO 2005008286 | A2 | | 27-01-2005 | EP | 1644756 | A2 | 12-04-2006 |
| | | | | EP | 1801616 | A2 | 27-06-2007 |
| | | | | JP | 5001649 | B2 | 15-08-2012 |
| | | | | JP | 5441879 | B2 | 12-03-2014 |
| | | | | JP | 2007527510 | A | 27-09-2007 |
| | | | | JP | 2011117969 | A | 16-06-2011 |
| | | | | US | 2007075251 | A1 | 05-04-2007 |
| | | | | US | 2011121980 | A1 | 26-05-2011 |
| | | | | WO | 2005008286 | A2 | 27-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2007064354 W

**Non-patent literature cited in the description**

- The structure of particle tracks. **KATZ R. ; SHARMA S. C. ; HOMAYOONFAR M.** Topics in Radiation Dosimetry, Radiation Dosimetry. Academic press, 1972, vol. 1

- **M. P. R. WALIGÓRSKI ; G. DANIALY ; KIM SUN LOH ; R. KATZ.** The Response of the Alanine Detector after Charged-Particle and Neutron Irradiations. *Applied Radiation and Isotopes,* 1989, vol. 40 (10-12), 923-933